# EUROPÄISCHE PATENTSCHRIFT

(11) **EP 2 334 746 B1**
(45) Veröffentlichungstag und Bekanntmachung des Hinweises auf die Patenterteilung: **01.02.2012**
(21) Anmeldenummer: 09782420.5
(22) Anmeldetag: 01.09.2009
(51) Int. Cl.: C09J 133/00, G09F 3/02

(54) **KLEBSTOFFZUSAMMENSETZUNG FÜR WEICHMACHERFREIE, SELBSTKLEBENDE, WIEDERABLÖSBARE ETIKETTEN**
ADHESIVE COMPOSITION FOR PLASTICIZER-FREE, SELF-ADHESIVE REMOVABLE LABELS
COMPOSITION ADHÉSIVE POUR ÉTIQUETTES AUTOCOLLANTES REPOSITIONNABLES SANS PLASTIFIANT

(30) Priorität: 12.09.2008 EP 08164274
(43) Veröffentlichungstag der Anmeldung: 22.06.2011
(73) Patentinhaber: BASF SE, 67056 Ludwigshafen (DE)
(72) Erfinder: SCHUMACHER, Karl-Heinz, 67433 Neustadt (DE); CIMPEANU, Carmen-Elena, 67059 Ludwigshafen (DE)
(86) Internationale Anmeldenummer: PCT/EP2009/061233
(87) Internationale Veröffentlichungsnummer: WO 2010/028976

(56) Entgegenhaltungen:
- EP-A- 0 625 557
- US-A1- 2007 026 572

## Beschreibung

Die Erfindung betrifft Klebstoffzusammensetzungen, welche ein vorzugsweise in Wasser dispergiertes Polymer mit niedriger Glasübergangstemperatur enthalten, welches herstellbar ist bei vergleichsweise niedrigen Polymerisationstemperaturen aus 2-Ethylhexylacrylat und weiteren, ethylenisch ungesättigten, radikalisch copolymerisierbaren Monomeren, von denen ein Teil säurehaltige Comonomere sind. Die Erfindung betrifft auch mit der Klebstoffzusammensetzung beschichtete Etiketten und Verfahren zur Herstellung von weichmacherfreien, selbstklebenden, wiederablösbaren Papieretiketten.

Wiederablösbare Etiketten werden zum temporären Etikettieren von Gegenständen eingesetzt, wobei die Etiketten nach Gebrauch wieder möglichst rückstandsfrei von der etikettierten Oberfläche abgelöst werden sollen. Ein Beispiel sind Papieretiketten, die typischerweise auf der Rückseite von Büchern geklebt werden, Informationen über den Produzenten, Händler oder den Preis enthalten und vom Endkäufer des Buches entfernt werden können. Für wiederablösbare Papieretiketten werden heute neben lösungsmittelhaltigen Klebstoffen und Hotmelts auch wässrige Klebstoffe eingesetzt, die Weichmacher enthalten. Der Weichmacher soll für hinreichend niedrige Klebewerte und ein gutes Wiederablöseverhalten der Etiketten sorgen. Ein Nachteil dieser Weichmacher besteht darin, dass sie aus dem Klebstoff durch das Etikettenpapier an dessen Oberfläche migrieren können. Diese Migration an die Oberfläche wird auch als "Durchschlagsverhalten" bezeichnet. Ein schlechtes Durchschlagsverhalten, d.h. die Migration einer erheblichen Menge an Weichmacher oder an anderen, niedermolekularen Bestandteilen der Klebstoffzusammensetzung von der mit Klebstoff versehenen Rückseite des Etiketts durch das Etikett hindurch an die Etikettenoberfläche kann zu Problemen beim Bedrucken der Etikettenoberflächen führen. Die Etikettenoberfläche ist dann nicht mehr fehlerfrei bedruckbar. Auch aufgrund der Herstellungsweise in Haftklebstoffdispersionen auf Basis von adhäsiven Polymeren enthaltenen niedrigmolekularen, oligomeren Verbindungen kann es zu einem Durchschlagsverhalten kommen. Außerdem kann Weichmacher im Klebstoff zum raschen Verblassen von Farben führen, die in Thermopapieren durch Wärmeeinwirkung erzeugt worden sind. Eine Reduktion der Einsatzmenge oder ein Verzicht auf Weichmacher in herkömmlichen wässrigen Etikettierklebstoffen hat eine schlechte Ablösbarkeit zur Folge, sodass die Gefahr besteht, dass beim Ablösen des Etiketts Klebstoffrückstände oder Etikettenrückstände auf dem etikettierten Gegenstand verbleiben, insbesondere weil bei Alterung der Verklebung die Klebewerte häufig ansteigen.

In der EP 1036802 A1 wird ein Verfahren zur Herstellung einer wässrigen Polymerdispersion für wiederablösbare Haftklebefilme beschrieben. Monomerauswahl und Auswahl der Menge an Comonomeren ist derart, dass eine Glasübergangstemperatur der Polymerisate von -60°C bis 0°C resultiert. Für den Einsatz als Haftkleber können die Polymerdispersionen u. a. mit Weichmachern als Zusatz modifiziert sein.

Es bestand daher die Aufgabe, eine vorzugsweise auf Wasser als Trägermaterial basierende Klebstoffzusammensetzung zur Verfügung zu stellen für weichmacherfreie, wiederablösbare, selbstklebende Papieretiketten mit gutem Durchschlagsverhalten, hinreichend niedrigen, bei Alterung der Verklebung nicht oder nur wenig ansteigenden Klebewerten und daher mit guter Wiederablösbarkeit.

Gegenstand der Erfindung ist eine Klebstoffzusammensetzung, enthaltend mindestens ein Polymer, herstellbar durch Polymerisation von
(i) 80-95 Gew.%, bezogen auf die Gesamtmenge an Monomeren, 2-Ethylhexylacrylat,
(ii) 5-20 Gew.%, bezogen auf die Gesamtmenge an Monomeren, an weiteren, von (i) verschiedenen, ethylenisch ungesättigten, radikalisch copolymerisierbaren Monomeren, wovon 0,2 bis 2 Gew.%, bezogen auf die Gesamtmenge an Monomeren, Säuregruppen enthaltende, insbesondere carbonsäurehaltige Comonomere sind;
wobei das Polymer eine Glasübergangstemperatur von kleiner -61 °C aufweist und wobei die Polymerisation bei Temperaturen kleiner 80°C durchgeführt wird.

Gegenstand der Erfindung ist insbesondere eine wässrige Haftklebstoffzusammensetzung, enthaltend mindestens ein in Wasser dispergiertes Emulsionspolymerisat, herstellbar durch Emulsionspolymerisation von
(i) 80-95 Gew.%, bezogen auf die Gesamtmenge an Monomeren, 2-Ethylhexylacrylat,
(ii) 5-20 Gew.%, bezogen auf die Gesamtmenge an Monomeren, an weiteren, ethylenisch ungesättigten, radikalisch copolymerisierbaren Monomeren, wovon 0,2 bis 2 Gew.%, bezogen auf die Gesamtmenge an Monomeren, carbonsäurehaltige Comonomere sind;
wobei das Emulsionspolymerisat eine Glasübergangstemperatur von kleiner -61 °C aufweist und wobei die Emulsionspolymerisation bei Temperaturen kleiner 80°C durchgeführt wird.

Gegenstand der Erfindung ist auch ein Etikett, welches selbstklebend und wiederablösbar ist und zumindest teilweise mit einem erfindungsgemäßen Haftklebstoff beschichtet wurde.

Gegenstand der Erfindung ist auch ein Verfahren zur Herstellung im Wesentlichen weichmacherfreier, selbstklebender, wiederablösbarer Papieretiketten, wobei ein im Wesentlichen weichmacherfreier erfindungsgemäßer Haftklebstoff zur Verfügung gestellt wird und ein Papieretikett zumindest teilweise mit dem Haftklebstoff beschichtet wird.

Im Folgenden wird gelegentlich die Bezeichnung (Meth)acrylat und ähnliche Bezeichnungen als abkürzende Schreibweise verwendet für "Acrylat oder Methacrylat".

Die Zusammensetzung enthält mindestens ein organisches Polymer. Dieses Polymer ist adhäsiv, d.h. es ist in der Lage, Substrate zu verbinden, ohne dass die Substrate selbst merklich verändert werden, wobei der Zusammenhalt der verbundenen Substrate durch Adhäsionskräfte (Anziehungskräfte zwischen Adhäsiv und Substrat) und Kohäsion (innerer Zusammenhalt des Adhäsivs) bestimmt wird. Die Polymere sind erhältlich durch radikalische Polymerisation von radikalisch polymerisierbaren, ethylenisch ungesättigten Verbindungen (Monomeren). Besonders bevorzugt sind Emulsionspolymerisate, d.h. die Reaktionsprodukte der Polymerisation der Monomere in wässriger Dispersion.

Das Polymer wird gebildet aus 80 bis 95 Gew.%, vorzugsweise 82 bis 93 Gew.%, bezogen auf die Gesamtmenge an Monomeren 2-Ethylhexylacrylat. Das Polymer wird außerdem gebildet aus 5-20 Gew.%, vorzugsweise 7 bis 18 Gew.%, bezogen auf die Gesamtmenge an weiteren, von 2-Ethylhexylacrylat verschiedenen, ethylenisch ungesättigten, radikalisch copolymerisierbaren Monomeren. Von den weiteren Monomeren sind 0,2 bis 2 Gew.%, vorzugsweise 0,4 bis 1,8 Gew.%, bezogen auf die Gesamtmenge an Monomeren, säurehaltige, insbesondere carbonsäurehaltige Comonomere. Die keine Säuregruppen enthaltende Monomere der weiteren Monomeren sind vorzugsweise ausgewählt aus C1-C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Geeignete weitere Monomere sind z.B. (Meth)acrylsäurealkylester mit einem C1-C10-Alkylrest, wie Methylmethacrylat, Methylacrylat, n-Butylacrylat und Ethylacrylat. Insbesondere sind auch Mischungen der (Meth)acrylsäurealkylester geeignet. Vinylester von Carbonsäuren mit 1 bis 20 C-Atomen sind z.B. Vinyllaurat, Vinylstearat, Vinylpropionat, Versaticsäurevinylester und Vinylacetat. Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutylether. Bevorzugt sind Vinylether von 1 bis 4 C-Atome enthaltenden Alkoholen. Geeignete Kohlenwasserstoffe mit 4 bis 8 C-Atomen und zwei olefinischen Doppelbindungen sind zum Beispiel Butadien, Isopren und Chloropren. Weitere Monomere sind z.B. auch Hydroxylgruppen enthaltende Monomere, insbesondere C1-C10-Hydroxyalkyl(meth)acrylate oder (Meth)acrylamid. Als weitere Monomere seien darüber hinaus Phenyloxyethylglykolmono-(meth)acrylat, Glycidyl(meth)acrylat, Aminoalkyl(meth)acrylate wie z.B. 2-Aminoethyl-(meth)acrylat genannt. Alkylgruppen weisen vorzugsweise von 1 bis 20 C-Atome auf. Als weitere Monomere seien auch vernetzende Monomere genannt.

Als weitere Monomere bevorzugt sind C1- bis C10-Alkylacrylate und C1- bis C10-Alkylmethacrylate, insbesondere C1- bis C8-Alkylacrylate und -methacrylate, Vinylaromaten, insbesondere Styrol und Kohlenwasserstoffe mit 4 bis 8 C-Atomen und zwei olefinischen Doppelbindungen, insbesondere Butadien und Mischungen dieser Monomere. Ganz besonders bevorzugt sind Methylacrylat, Methylmethacrylat, Ethylacrylat, n-Butylacrylat, n-Hexylacrylat, Octylacrylat, Styrol, Butadien sowie Mischungen dieser Monomere.

Neben den keine Säuregruppen aufweisenden weiteren Monomeren enthält das Polymer Säuregruppen enthaltende weitere Monomere, z.B. Monomere mit Carbonsäure-, Sulfonsäure- oder Phosphonsäuregruppen. Bevorzugt sind Carbonsäuregruppen. Genannt seien z.B. Acrylsäure, Methacrylsäure, Itaconsäure, Maleinsäure oder Fumarsäure. Die Säuregruppen können in protonierter Form oder in Form ihrer Salze vorliegen.

Insbesondere ist das Polymer zu mindestens 5 Gew.%, besonders bevorzugt zu mindestens 7 Gew.% aus von 2-Ethylhexylacrylat verschiedenen C1 bis C20 Alkyl(meth)acrylaten und zu mindestens 0,5 Gew.% Acrylsäure aufgebaut.

Die Art und Menge der Monomere bzw. die Verhältnisse verschiedener Comonomere zueinander sind dabei derart, dass die Glasübergangstemperatur kleiner -61 °C, z.B. von -80 bis -62°C beträgt. Die Glasübergangstemperatur lässt sich nach üblichen Methoden wie Differential Scanning Calorimetrie (s. z.B. ASTM 3418/82, sog. "midpoint temperature") bestimmen.

Die Herstellung der Polymere erfolgt vorzugsweise als Emulsionspolymerisat durch Emulsionspolymerisation. Die Emulsionspolymerisation erfolgt unter Verwendung von Emulgatoren und/oder Schutzkolloiden bzw. Stabilisatoren als grenzflächenaktive Substanzen. Vorzugsweise werden als grenzflächenaktive Substanzen ausschließlich Emulgatoren eingesetzt, deren Molekulargewicht im Unterschied zu den Schutzkolloiden üblicherweise unter 2000 g/mol liegen. Vorzugsweise werden anionische und nichtionische Emulgatoren als grenzflächenaktive Substanzen verwendet. Gebräuchliche Emulgatoren sind z.B. ethoxylierte Fettalkohole (EO-Grad: 3 bis 50, Alkylrest: C8- bis C36), ethoxylierte Mono-, Di- und Trialkylphenole (EO-Grad: 3 bis 50, Alkylrest: C4- bis C9), sowie Alkali- und Ammoniumsalze von Alkylsulfaten (Alkylrest: C8- bis C12), von ethoxylierten Alkanolen (EO-Grad: 4 bis 30, Alkylrest: C12- bis C18), von ethoxylierten Alkylphenolen (EO-Grad: 3 bis 50, Alkylrest: C4- bis C9), von Alkylsulfonsäuren (Alkylrest: C12- bis C18) und von Alkylarylsulfonsäuren (Alkylrest: C9- bis C18). Handelsprodukte geeigneter Emulgatoren sind z.B. Dowfax^{®} 2 A1, Emulan^{®} NP 50, Dextrol^{®} OC 50, Emulgator 825, Emulgator 825 S, Emulan^{®} OG, Texapon^{®} NSO, Nekanil^{®} 904 S, Disponil^{®} FES 77, Lutensol^{®} AT 18, Steinapol VSL, Emulphor NPS 25.

In einer bevorzugten Ausführungsform der Erfindung ist das Emulsionspolymerisat hergestellt in Gegenwart einer Mischung von mindestens einem ersten anionischen Emulgator und mindestens einem zweiten anionischen Emulgator, wobei der erste Emulgator ein Alkylarylsulfonat ist und wobei der zweite Emulgator ein ethoxyliertes Fettalkoholsulfat ist. Alkylarylsulfonate sind Verbindungen, welche mindestens eine Alkylgruppe (vorzugsweise eine), mindestens eine Arylgruppe (vorzugsweise eine oder zwei) und mindestens eine Sulfonsäuregruppe bzw Sulfonatgruppe (vorzugsweise eine oder zwei) aufweisen. Die Alkylgruppe weist vorzugweise 8 bis 20 C-Atome auf. Aryl ist vorzugsweise Phenyl. Das Gewichtsverhältnis von erstem zu zweitem anionischen Emulgator kann beispielsweise von 1:5 bis 5:1 betragen. Geeignete Alkylarylsulfonate sind beispielsweise Akylbenzolsulfonate, wobei die Alkylgruppe 8 bis 20 C-Atome aufweisen kann, z.B. Natrium n-Alkyl (C10-13)-benzolsulfonat. Geeignete Alkylarylsulfonate sind auch Alkyldiphenyloxiddisulfonate, wobei die Alkylgruppe 8 bis 20 C-Atome aufweisen kann, z.B. Dinatrium-dodecyldiphenyletherdisulfonat. Die ethoxylierten Fettalkoholsulfate können beispielsweise 8 bis 20 C-Atome in der Fettalkylkette aufweisen, z.B. Natriumlaurylethersulfat oder Natrium-C12/14-Alkylpolyglykolethersulfat.

Die Emulsionspolymerisation kann mit wasserlöslichen Initiatoren gestartet werden. Wasserlösliche Initiatoren sind z.B. Ammonium- und Alkalimetallsalze der Peroxodischwefelsäure, z.B. Natriumperoxodisulfat, Wasserstoffperoxid oder organische Peroxide, z.B. tert-Butylhydroperoxid. Als Initiator geeignet sind auch so genannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei der Reduktionskomponente handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit. Es können auch mehrere, verschiedene Initiatoren bei der Emulsionspolymerisation Verwendung finden.

In einer bevorzugten Ausführungsform der Erfindung werden eine oder mehrere Initiatoren eingesetzt, wobei die Gesamtmenge an Initiator weniger als 0,4 pphm (parts per hundred monomer; Gewichtsteile pro hundert Gewichtsteile Monomer), insbesondere maximal 0,3 pphm, z.B. von 0,1 oder von 0,2 bis 0,3 pphm beträgt.

Bei der Polymerisation können Molekulargewichtsregler eingesetzt werden, z.B. in Mengen von 0,1 bis 0,8 Gew.-Teile, bezogen auf 100 Gew.-Teile der zu polymerisierenden Monomeren. Hierdurch kann die Molmasse des Emulsionspolymerisats verringert werden. Geeignet sind z.B. Verbindungen mit einer Thiolgruppe wie tert.-Butylmercaptan, Thioglycolsäureethylacrylester, Mercaptoethanol, Mercaptopropyltrimethoxysilan oder tert.-Dodecylmercaptan. In einer bevorzugten Ausführungsform werden keine Molekulargewichtsregler eingesetzt.

Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Bei der Emulsionspolymerisation werden wässrige Dispersionen des Polymeren in der Regel mit Feststoffgehalten von 15 bis 75 Gew.-%, bevorzugt von 20 bis 70 Gew.% oder von 40 bis 70 Gew.-% erhalten. In einer Ausführungsform enthält die Dispersion bzw. der Haftklebstoff mindestens 60 Gew.% dispergiertes Polymer. Um Feststoffgehalte > 60 Gew.-% erreichen zu können, sollte man eine bi- oder polymodale Teilchengröße einstellen, da sonst die Viskosität zu hoch wird und die Dispersion nicht mehr handhabbar ist. Die Erzeugung einer neuen Teilchengeneration kann beispielsweise durch Zusatz von Saat vor oder während der Emulsionspolymerisation, durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer oder mehrerer neuer Teilchengenerationen kann zu einem beliebigen Zeitpunkt erfolgen. Er richtet sich nach der für eine niedrige Viskosität angestrebten Teilchengrößenverteilung.

Die erfindungsgemäß einzusetzenden Polymere werden vorzugsweise in Form einer wässrigen Dispersion verwendet. Die mittlere Teilchengröße der in der wässrigen Dispersion dispergierten Polymerteilchen beträgt vorzugsweise von 100 bis 500 nm. Die Größenverteilung der Dispersionsteilchen kann monomodal, bimodal oder multimodal sein. Bei monomodaler Teilchengrößenverteilung ist die mittlere Teilchengröße der in der wässrigen Dispersion dispergierten Polymerteilchen vorzugsweise kleiner 500 nm. Bei bi- oder multimodaler Teilchengrößenverteilung kann die Teilchengröße auch bis zu 1000 nm betragen. Unter mittlerer Teilchengröße wird hier der d50-Wert der Teilchengrößenverteilung verstanden, d.h. 50 Gew.-% der Gesamtmasse aller Teilchen haben einen kleineren Teilchendurchmesser als der d50-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden.

Das Lösungs- bzw. Dispergiermittel der Klebstoffzusammensetzung kann sowohl nur aus Wasser, als auch aus Mischungen aus Wasser und damit mischbaren Flüssigkeiten wie Methanol oder Ethanol bestehen. Vorzugsweise wird nur Wasser verwendet. Der pH-Wert der Polymerdispersion bzw. der Klebstoffzusammensetzung wird vorzugsweise auf pH größer 4,5, insbesondere auf einen pH-Wert zwischen 5 und 9,5 eingestellt.

Die Klebstoffzusammensetzungen können allein aus dem Lösungsmittel und dem Polymer bestehen. Die Klebstoffzusammensetzung kann jedoch auch noch weitere Zusatzstoffe enthalten, z.B. Füllstoffe, Farbstoffe, Verlaufsmittel, Verdicker (vorzugsweise Assoziatiwerdicker), Entschäumer, Pigmente, Netzmittel oder Tackifier (klebrigmachende Harze). Für eine bessere Benetzung von Oberflächen können die Klebstoffe Benetzungshilfsmittel, z. B. Fettalkoholethoxylate, Alkylphenolethoxylate, Nonylphenolethoxylate, Polyoxyethylene, Polyoxypropylene oder Natriumdodecylsulfonate enthalten. Die Menge an Zusatzstoffen beträgt im allgemeinen 0,05 bis 5 Gew.-Teile, insbesondere 0,1 bis 3 Gew.-Teile auf 100 Gew.-Teile Polymer (fest).

In einer Ausführungsform ist die Klebstoffzusammensetzung im Wesentlichen frei von Weichmachern. Weichmacher sind Zusätze, welche die Klebekraft herabsetzen. Im Wesentlichen frei von Weichmachern bedeutet, dass die Zusammensetzungen weniger als 1 Gew.%, vorzugsweise weniger als 0,5 Gew.%, bezogen auf die Gesamtzusammensetzung an Weichmachern, besonders bevorzugt keinen Weichmacher enthalten. In einer Ausführungsform handelt es sich bei der erfindungsgemäßen Klebstoffzusammensetzung um eine wässrige Dispersion eines Polymeren, welches gebildet ist aus
(i) 80-95 Gew.%, bezogen auf die Gesamtmenge an Monomeren, 2-Ethylhexylacrylat,
(ii) 3-18 Gew.%, bezogen auf die Gesamtmenge an Monomeren, an C1- bis C10-Alkyl(Meth)acrylat und
(iii) 0,2 bis 2 Gew.%, bezogen auf die Gesamtmenge an Monomeren, an Monomeren ausgewählt aus Acrylsäure und Methacrylsäure;
wobei das Polymer eine Glasübergangstemperatur von kleiner -61°C aufweist und wobei die Polymerisation als Emulsionspolymerisation bei Temperaturen kleiner 80°C durchgeführt wird.

Die erfindungsgemäße Klebstoffzusammensetzung ist vorzugsweise ein Haftklebstoff. Ein Haftklebstoff ist ein viskoelastischer Klebstoff, dessen abgebundener Film bei Raumtemperatur (20°C) in trockenem Zustand permanent klebrig und klebfähig bleibt. Die Klebung auf Substraten erfolgt sofort durch leichten Anpressdruck.

Die erfindungsgemäße Klebstoffzusammensetzung kann zur Herstellung von selbstklebenden Artikeln verwendet werden. Die Artikel sind zumindest teilweise mit dem Haftklebstoff beschichtet. Vorzugsweise sind die selbstklebenden Artikel nach der Verklebung wiederabziehbar. Bei den selbstklebenden Artikeln kann es sich z.B. um Folien, Bänder oder Etiketten handeln. Geeignete Trägermaterialien sind z.B. Papier, Kunststofffolien und Metallfolien. Bei erfindungsgemäßen selbstklebenden Bändern kann es sich um einseitig oder beidseitig beschichtete Bänder aus den obigen Substanzen handeln. Bei erfindungsgemäßen selbstklebenden Etiketten kann es sich um Etiketten aus Papier oder einer thermoplastischen Folie handeln. Als thermoplastische Folie kommen z.B. Folien aus Polyolefinen (z.B. Polyethylen, Polypropylen), Polyolefincopolymeren, Folien aus Polyestern (z.B. Polyethylenterephtalat) oder Polyacetat in Betracht. Die Oberflächen der thermoplastischen Polymerfolien sind vorzugweise coronabehandelt. Die Etiketten sind einseitig mit Klebstoff beschichtet. Bevorzugte Substrate für die selbstklebenden Artikel sind Papier und Polymerfolien. Bevorzugte selbstklebende Artikel sind Papieretiketten

Die Artikel sind auf mindestens einer Oberfläche zumindest teilweise mit einer erfindungsgemäßen Klebstoffzusammensetzung beschichtet. Der Klebstoff kann nach üblichen Methoden wie Rakeln oder Streichen auf die Artikel aufgetragen werden. Die Auftragsmenge beträgt bevorzugt 0,1 bis 20 g, besonders bevorzugt 2 bis 15 g Feststoff pro m2. Nach dem Auftragen folgt im Allgemeinen ein Trocknungsschritt zur Entfernung des Wasser bzw. der Lösungsmittel.

Bei den Substraten, auf welche die selbstklebenden Artikel vorteilhaft aufgebracht werden können, kann es sich z.B. um Metall, Holz, Glas, Papier oder Kunststoff handeln. Die selbstklebenden Artikel eignen sich insbesondere zum Verkleben auf Verpackungsoberflächen, Kartons, Kunststoffverpackungen, Bücher, Fenster, Kraftfahrzeugkarosserien oder Karosserieteilen. Die selbstklebenden Artikel bevorzugter Ausführungsformen können von den Gegenständen von Hand wieder abgezogen werden, ohne dass ein Klebstoffrückstand auf dem Gegenstand verbleibt. Die Haftung auf den Gegenständen ist gut, trotzdem lassen sich die Folien, Bänder und Etiketten leicht abziehen. Die gute Wiederabziehbarkeit ist auch noch nach längerer Zeit gegeben. Papieretiketten weisen ein gutes Durchschlagsverhalten und eine gute Bedruckbarkeit auf.

Eine Ausführungsform der Erfindung ist ein Papieretikett, welches eine erste Oberfläche und eine zweite Oberfläche aufweist, wobei die erste Oberfläche selbstklebend ist und zumindest teilweise mit einer erfindungsgemäßen Haftklebstoffzusammensetzung beschichtet ist und wobei die zweite Oberfläche bedruckt oder die zweite Oberfläche oder das Etikett zumindest teilweise gefärbt ist. Die Färbung kann z.B. durch eine farbige Beschichtung mit Pigmenten oder Farbstoffen, durch farbiges Bedrucken oder in Thermopapieren durch Wärmeeinwirkung erzeugt worden sein.

Eine weitere Ausführungsform der Erfindung betrifft die Verwendung eines erfindungsgemäßen Haftklebstoffs zur Herstellung im Wesentlichen weichmacherfreier, selbstklebender, wiederablösbarer Papieretiketten.

Die Erfindung betrifft auch ein Verfahren zur Herstellung im Wesentlichen weichmacherfreier, selbstklebender, wiederablösbarer Papieretiketten, wobei ein im Wesentlichen weichmacherfreier erfindungsgemäßer Haftklebstoff zur Verfügung gestellt wird und ein Papieretikett zumindest teilweise mit dem Haftklebstoff beschichtet wird.

### Beispiele

Es werden folgende Stoffe verwendet:

| | |
|---|---|
| Disponil^{®} LDBS 20 | Natriumdodecylbenzylsulfonat, 20%ig in Wasser |
| Disponil^{®} FES 27 | Natriumlaurylethersulfat, 27%ig in Wasser |
| Disponil^{®} FES 77 | Natriumlaurylethersulfat, 33%ig in Wasser |
| DOWFAX^{®} 2A1 | Dinatrium-dodecyldiphenylether-disulfonat |

### Herstellung der Polymerdispersionen

Es wird eine wässrige Polymerdispersion hergestellt durch radikalische Polymerisation folgender Bestandteile in Wasser:

| | | |
|---|---|---|
| Vorlage: | 97,19 g | vollentsalztes Wasser |
| | 1,45 g | Polystyrol-Saat |
| | 3,6 g | vom Zulauf 2 |

| | | |
|---|---|---|
| Zulauf 1: | 340 g | vollentsalztes Wasser |
| | 15 g | Disponil^{®} LDBS 20 |
| | 10,7 g | Disponil^{®} FES 27 |
| | 6 g | Acrylsäure |
| | 54 g | n-Butylacrylat |
| | 540 g | 2-Ethylhexylacrylat |

Disponil^{®} LDBS 20 kann auch ganz oder teilweise durch DOWFAX^{®} 2A1 ersetzt werden. Disponil^{®} FES 27 kann auch ganz oder teilweise durch Disponil^{®} FES 77 ersetzt werden.

### Zulauf 2: 18 g Lösung von Natriumperoxodisulfat, 7%ig in Wasser

Zulauf 1 und 2 werden über 3 Stunden bei 75°C gleichmäßig zugegeben. Dann wird noch 30 min nachpolymerisiert. Der Feststoffgehalt der erhaltenen Polymerdispersion beträgt 56%.

Die weiteren Dispersionen 2 bis 6 werden analog hergestellt mit den in der nachfolgenden Tabelle angegebenen Zusammensetzungen und Parametern.

| Beispiel | Monomere1) | Polymerisationstemperatur [°C] | Tg [°C] |
|---|---|---|---|
| 1 | 90 EHA; 9 BA; 1 AS | 75 | -67 |
| 2 | 85 EHA; 14 BA; 1 AS | 75 | -63 |
| 3 2), 3) | 0 EHA; 99 BA; 1 AS | 85 | -48 |
| 4 2) | 69,6 EHA; 29 BA; 1 AS | 90 | -55 |
| 5 2) | 90 EHA; 9 BA; 1 AS | 90 | -67 |
| 64) | 90 EHA; 9 BA; 1 AS | 75 | -67 |

| | | | |
|---|---|---|---|
| 1) Monomerzusammensetzung in Gewichtsteilen 2-Ethylhexylacrylat (EHA, n-Butylacrylat (BA) und Acrylsäure (AS) 2) Vergleichsbeispiel 3) enthält 20 Gew.% Diisononyladipat (Weichmacher) und als einzigen Emulgator 1 pphm Disponil^{®} LDBS 20 4) enthält als einzigen Emulgator 1 pphm Disponil^{®} FES 77 (Natrium C12/14-Alkylpolyglykolethersulfat) | | | |

### Anwendungstechnische Prüfungen

Zur Prüfung der Beispielzusammensetzungen wurde ein handelsübliches Etikettenpapier mit einem Flächengewicht von 75 g/m² mit 17 g/m² (Feststoffgehalt) der Beispielzusammensetzungen im Transferverfahren über ein Silikonpapier beschichtet. Die so erhaltenen Etiketten wurden auf den zu prüfenden Oberflächen aufgeklebt und die Verklebungen 1 Woche bei 60°C gealtert.

Die Wiederabziehbarkeit (Schälfestigkeit) wird wie folgt untersucht. Die Schälfestigkeit ist die Kraft, die ein auf ein Trägermaterial aufgebrachter Klebstoff bei einer definierten Abzugsgeschwindigkeit dem Abziehen vom Substrat entgegensetzt. Zur Untersuchung der Schälfestigkeit wurden Prüfstreifen in Beschichtungsrichtung in einer Breite von 25 mm ausgeschnitten. Das Trennpapier wird vom Prüfstreifen abgezogen, der Prüfstreifen mit Hilfe einer gummibeschichteten Kaschierrolle blasenfrei von Hand ohne zusätzlichen Druck auf das Prüfsubstrat aufgelegt und anschließend angerollt. Die Prüfung erfolgt bei Normklima (23°C, 50% rel. Luftfeuchte) an einer Zugprüfmaschine. Hierbei wird der Prüfstreifen vom unteren Ende her zur Hälfte abgezogen und im Winkel von 180° nach oben geschlagen. Das nun freie Ende des Prüfsubstrates wird in die Zugprüfmaschine eingespannt und der Prüfstreifen wird im Winkel von 180 Grad mit einer Maschinengeschwindigkeit von 300 mm/Minute abgezogen. Nach jeder Messung wird das Prüfsubstrat erneuert. Es werden mindestens 3 Einzelmessungen durchgeführt. Die Angabe der Prüfergebnisse erfolgt in N/mm Breite. Rückstände auf der Prüfoberfläche wurden visuell ermittelt.

Zur Beurteilung des Durchschlagverhaltens des Klebstoffs durch das Etikettenpapier wurde das Etikett 1 Woche bei 50°C gealtert. Anschließend wurde visuell beurteilt, ob an der der beschichteten Oberfläche gegenüberliegenden Oberfläche des Etikettenpapiers Veränderungen sichtbar sind, die aussehen wie Fettflecken.

Die Ergebnisse sind in den folgenden Tabellen zusammengefasst.

| Beispiel | Durchschlagen | Schälfestigkeit auf E-delstahl | Schälfestigkeit auf Polycarbonat |
|---|---|---|---|
| 1 | kein | 4,6 | 5,9 |
| 2 | kein | 5,1 | 8,1 |
| 3 1) | deutlich sichtbar | 6,1 | 18 |
| 4 1) | sichtbar | 7,9 | 5,2 |
| 5 1) | sichtbar | 3,4 | 4,9 |
| 6 | kein | 5,2 | 1,7 |

| | | | |
|---|---|---|---|
| 1) Vergleichsbeispiel | | | |

| Beispiel | Rückstände nach Ablösen auf Edelstahl | Rückstände nach Ablösen auf Polycarbonat |
|---|---|---|
| 1 | keine | keine |
| 2 | keine | keine |
| 3 1) | keine | deutlich sichtbar |
| 4 1) | leichte | keine |
| 5 1) | keine | keine |
| 6 | deutlich sichtbar | keine |

| | | |
|---|---|---|
| 1) Vergleichsbeispiel | | |

Die erfindungsgemäßen Zusammensetzungen 1,2 und 6 zeichnen sich gegenüber den Vergleichszusammensetzungen 3-5 durch ein signifikant verbessertes Durchschlagsverhalten aus. Durch spezielle Wahl der Emulgatorkombination der Beispiele 1 und 2 kann zusätzlich ein besonders gutes Rückstandsverhalten erreicht werden.

## Patentansprüche

1. Klebstoffzusammensetzung, enthaltend mindestens ein Polymer, herstellbar durch Polymerisation von
(i) 80-95 Gew.%, bezogen auf die Gesamtmenge an Monomeren, 2-Ethylhexylacrylat,
(ii) 5-20 Gew.%, bezogen auf die Gesamtmenge an Monomeren, an weiteren, von (i) verschiedenen, ethylenisch ungesättigten, radikalisch copolymerisierbaren Monomeren, wovon 0,2 bis 2 Gew.%, bezogen auf die Gesamtmenge an Monomeren, Säuregruppen enthaltende Comonomere sind;
wobei das Polymer eine Glasübergangstemperatur von kleiner -61 °C aufweist und wobei die Polymerisation bei Temperaturen kleiner 80°C durchgeführt wird.

2. Klebstoffzusammensetzung nach Anspruch 1, **dadurch gekennzeichnet, dass** es sich um eine Haftklebstoffzusammensetzung in Form einer wässrigen Dispersion des Polymers handelt, und das Polymer ein durch Emulsionspolymerisation herstellbares adhäsives Emulsionspolymerisat ist.

3. Klebstoffzusammensetzung gemäß einem der vorhergehenden Ansprüche, **dadurch gekennzeichnet, dass** die weiteren Monomere ausgewählt sind aus C1 bis C20 Alkylacrylaten, C1 bis C20 Alkylmethacrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen, Acrylsäure, Methacrylsäure, Itaconsäure, Maleinsäure und Fumarsäure oder Mischungen dieser Monomeren.

4. Klebstoffzusammensetzung gemäß einem der vorhergehenden Ansprüche, **dadurch gekennzeichnet, dass** das Emulsionspolymerisat hergestellt ist aus
(i) 80-95 Gew.%, bezogen auf die Gesamtmenge an Monomeren, 2-Ethylhexylacrylat, und
(ii) 5-20 Gew.%, bezogen auf die Gesamtmenge an Monomeren, an weiteren Monomeren, ausgewählt aus C1 bis C10 Alkylacrylaten und C1 bis C10 Alkylmethacrylaten, Acrylsäure, und Methacrylsäure,
wovon 0,2 bis 2 Gew.%, bezogen auf die Gesamtmenge an Monomeren, Acrylsäure oder Methacrylsäure sind.

5. Klebstoffzusammensetzung gemäß einem der vorhergehenden Ansprüche, **dadurch gekennzeichnet, dass** das Emulsionspolymerisat hergestellt ist in Gegenwart einer Mischung von mindestens einem ersten anionischen Emulgator und mindestens einem zweiten anionischen Emulgator, wobei der erste Emulgator ein Alkylarylsulfonat ist und wobei der zweite Emulgator ein ethoxyliertes Fettalkoholsulfonat ist.

6. Klebstoffzusammensetzung gemäß einem der vorhergehenden Ansprüche, **dadurch gekennzeichnet, dass** der Feststoffgehalt von 40 bis 70 Gew.% beträgt.

7. Klebstoffzusammensetzung gemäß einem der vorhergehenden Ansprüche, **dadurch gekennzeichnet, dass** er im Wesentlichen keinen Weichmacher enthält.

8. Klebstoffzusammensetzung gemäß einem der vorhergehenden Ansprüche, **dadurch gekennzeichnet, dass** bei der Polymerisation eine oder mehrere Initiatoren eingesetzt werden, wobei die Gesamtmenge an Initiator weniger als 0,4 Gewichtsteile pro hundert Gewichtsteile Monomer beträgt.

9. Etikett, welches selbstklebend und wiederablösbar ist und zumindest teilweise mit einem Haftklebstoff gemäß einem der vorhergehenden Ansprüche beschichtet wurde.

10. Etikett gemäß dem vorhergehenden Anspruch, **dadurch gekennzeichnet, dass** das Trägermaterial ausgewählt ist aus Papier, Kunststofffolien und Metallfolien.

11. Etikett gemäß einem der Ansprüche 9 bis 10, **dadurch gekennzeichnet, dass** es sich um ein Papieretikett handelt, welches eine erste Oberfläche und eine zweite Oberfläche aufweist, wobei die erste Oberfläche selbstklebend ist und zumindest teilweise mit einem Haftklebstoff gemäß einem der Ansprüche 1 bis 8 beschichtet ist und wobei die zweite Oberfläche bedruckt oder die zweite Oberfläche oder das Etikett zumindest teilweise gefärbt ist.

12. Verwendung eines Haftklebstoffs gemäß einem der Ansprüche 1 bis 8 zur Herstellung im Wesentlichen weichmacherfreier, selbstklebender, wiederablösbarer Papieretiketten.

13. Verfahren zur Herstellung im Wesentlichen weichmacherfreier, selbstklebender, wiederablösbarer Papieretiketten, wobei ein im Wesentlichen weichmacherfreier Haftklebstoff gemäß einem der Ansprüche 1 bis 8 zur Verfügung gestellt wird und ein Papieretikett zumindest teilweise mit dem Haftklebstoff beschichtet wird.

## Claims

1. An adhesive composition comprising at least one polymer preparable by polymerizing
(i) 80-95% by weight, based on the total amount of monomers, of 2-ethylhexyl acrylate,
(ii) 5-20% by weight, based on the total amount of monomers, of further ethylenically unsaturated, free-radically copolymerizable monomers different from (i), of which 0.2% to 2% by weight, based on the total amount of monomers, are comonomers comprising acid groups,
the polymer having a glass transition temperature of less than -61°C and the polymerization being carried out at temperatures less than 80°C.

2. The adhesive composition according to claim 1, which is a pressure-sensitive adhesive composition in the form of an aqueous dispersion of the polymer, the polymer being an adhesive emulsion polymer preparable by emulsion polymerization.

3. The adhesive composition according to either of the preceding claims, wherein the further monomers are selected from C1 to C20 alkyl acrylates, C1 to C20 alkyl methacrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, acrylic acid, methacrylic acid, itaconic acid, maleic acid, and fumaric acid, or mixtures of these monomers.

4. The adhesive composition according to any of the preceding claims, wherein the emulsion polymer is prepared from
(i) 80-95% by weight, based on the total amount of monomers, of 2-ethylhexyl acrylate, and
(ii) 5-20% by weight, based on the total amount of monomers, of further monomers selected from C1 to C10 alkyl acrylates and C1 to C10 alkyl methacrylates, acrylic acid, and methacrylic acid,
of which 0.2 to 2% by weight, based on the total amount of monomers, are acrylic acid or methacrylic acid.

5. The adhesive composition according to any of the preceding claims, wherein the emulsion polymer is prepared in the presence of a mixture of at least one first anionic emulsifier and at least one second anionic emulsifier, the first emulsifier being an alkylarylsulfonate and the second emulsifier being an ethoxylated fatty alcohol sulfonate.

6. The adhesive composition according to any of the preceding claims, wherein the solids content is from 40% to 70% by weight.

7. The adhesive composition according to any of the preceding claims, comprising substantially no plasticizer.

8. The adhesive composition according to any of the preceding claims, wherein one or more initiators are used during the polymerization, the total amount of initiator being less than 0.4 part by weight per hundred parts by weight of monomer.

9. A label which is self-adhesive and redetachable and has been coated at least partly with a pressure-sensitive adhesive according to any of the preceding claims.

10. The label according to the preceding claim, wherein the backing material is selected from paper, polymeric films, and metal foils.

11. The label according to either of claims 9 and 10, which is a paper label which has a first surface and a second surface, the first surface being self-adhesive and being coated at least partly with a pressure-sensitive adhesive according to any of claims 1 to 8, and the second surface being printed, or the second surface or the label being at least partly colored.

12. The use of a pressure-sensitive adhesive according to any of claims 1 to 8 for producing a substantially plasticizer-free, self-adhesive, redetachable paper label.

13. A process for producing a substantially plasticizer-free, self-adhesive, redetachable paper label, which involves providing a substantially plasticizer-free, pressure-sensitive adhesive according to any of claims 1 to 8 and coating a paper label at least partly with the pressure-sensitive adhesive.

## Revendications

1. Composition adhésive, contenant au moins un polymère, fabricable par polymérisation de
(i) 80 à 95 % en poids, par rapport à la totalité des monomères, d'acrylate de 2-éthylhexyle,
(ii) 5 à 20 % en poids, par rapport à la totalité des monomères, d'autres monomères éthyléniquement insaturés, copolymérisables par voie radicalaire, différents de (i), dont 0,2 à 2 % en poids, par rapport à la totalité des monomères, sont des comonomères contenant des groupes acide ;
le polymère présentant une température de transition vitreuse inférieure à -61 °C et la polymérisation étant réalisée à des températures inférieures à 80 °C.

2. Composition adhésive selon la revendication 1, **caractérisée en ce qu'**il s'agit d'une composition adhésive sensible à la pression sous la forme d'une dispersion aqueuse du polymère, et le polymère est un polymère en émulsion adhésif fabricable par polymérisation en émulsion.

3. Composition adhésive selon l'une quelconque des revendications précédentes, **caractérisée en ce que** les autres monomères sont choisis parmi les acrylates d'alkyle en C1 à C20, les méthacrylates d'alkyle en C1 à C20, les esters de vinyle d'acides carboxyliques contenant jusqu'à 20 atomes C, les composés aromatiques de vinyle contenant jusqu'à 20 atomes C, les nitriles éthyléniquement insaturés, les halogénures de vinyle, les éthers de vinyle d'alcools contenant de 1 à 10 atomes C, les hydrocarbures aliphatiques contenant 2 à 8 atomes C et une ou deux doubles liaisons, l'acide acrylique, l'acide méthacrylique, l'acide itaconique, l'acide maléique et l'acide fumarique ou les mélanges de ces monomères.

4. Composition adhésive selon l'une quelconque des revendications précédentes, **caractérisée en ce que** le polymère en émulsion est fabriqué à partir de
(i) 80 à 95 % en poids, par rapport à la totalité des monomères, d'acrylate de 2-éthylhexyle, et
(ii) 5 à 20 % en poids, par rapport à la totalité des monomères, d'autres monomères, choisis parmi les acrylates d'alkyle en C1 à C10 et les méthacrylates d'alkyle en C1 à C10, l'acide acrylique et l'acide méthacrylique,
dont 0,2 à 2 % en poids, par rapport à la totalité des monomères, sont de l'acide acrylique ou de l'acide méthacrylique.

5. Composition adhésive selon l'une quelconque des revendications précédentes, **caractérisée en ce que** le polymère en émulsion est fabriqué en présence d'un mélange d'au moins un premier émulsifiant anionique et d'au moins un second émulsifiant anionique, le premier émulsifiant étant un sulfonate d'alkylaryle et le second émulsifiant étant un sulfonate d'alcool gras éthoxylé.

6. Composition adhésive selon l'une quelconque des revendications précédentes, **caractérisée en ce que** la teneur en solides est de 40 à 70 % en poids.

7. Composition adhésive selon l'une quelconque des revendications précédentes, **caractérisée en ce qu'**elle ne contient essentiellement pas de plastifiant.

8. Composition adhésive selon l'une quelconque des revendications précédentes, **caractérisée en ce qu'**un ou plusieurs initiateurs sont utilisés lors de la polymérisation, la totalité des initiateurs étant inférieure à 0,4 partie en poids pour cent parties en poids de monomère.

9. Étiquette, qui est auto adhésive et décollable, et qui a été revêtue au moins en partie avec un adhésif sensible à la pression selon l'une quelconque des revendications précédentes.

10. Étiquette selon la revendication précédente, **caractérisée en ce que** le matériau support est choisi parmi le papier, les films plastiques et les films métalliques.

11. Étiquette selon l'une quelconque des revendications 9 à 10, **caractérisée en ce qu'**il s'agit d'une étiquette en papier, qui comprend une première surface et une seconde surface, la première surface étant autoadhésive et revêtue au moins en partie avec un adhésif sensible à la pression selon l'une quelconque des revendications 1 à 8, et la seconde surface étant imprimée ou la seconde surface ou l'étiquette étant au moins partiellement colorée.

12. Utilisation d'un adhésif sensible à la pression selon l'une quelconque des revendications 1 à 8 pour la fabrication d'étiquettes en papier essentiellement exemptes de plastifiant, autoadhésives et décollables.

13. Procédé de fabrication d'étiquettes en papier essentiellement exemptes de plastifiant, autoadhésives et décollables, dans lequel un adhésif sensible à la pression essentiellement exempt de plastifiant selon l'une quelconque des revendications 1 à 8 est préparé et une étiquette en papier est revêtue au moins en partie avec l'adhésif sensible à la pression.
